# EUROPEAN PATENT SPECIFICATION

(11) **EP 2 453 156 B1**
(45) Date of publication and mention of the grant of the patent: **31.07.2019**
(21) Application number: 11189219.6
(22) Date of filing: 15.11.2011
(51) Int. Cl.: F16L 33/22, F16L 37/092

(54) **Pipe joint**
Rohrverbindung
Raccord de tuyau

(30) Priority: 16.11.2010 JP 2010255878
(43) Date of publication of application: 16.05.2012
(73) Proprietor: Bridgestone Corporation, Tokyo 104-8340 (JP)
(72) Inventor: Sakurada, Akiyoshi, Tokyo, 104-8340 (JP)
(74) Representative: Oxley, Robin John George

(56) References cited:
- WO-A1-2006/040512
- JP-A- H07 286 693
- JP-A- 2004 204 659
- JP-A- 2004 204 659
- US-A- 5 230 539
- US-A1- 2005 140 140

## Description

### BACKGROUND

### Technical Field

The present invention relates to a pipe joint that connects pipe bodies, and particularly relates to a pipe joint that forms a seal with an outer face of a pipe body.

### Related Art

A pipe joint that forms a seal with the outer face of a pipe body has been known heretofore (for example, see Japanese Patent Application Laid-Open (JP-A) No. 2004-204659). In this pipe joint, a support sleeve is used for supporting (bearing) the inner side of the pipe body. The support sleeve is commonly constituted by a tubular metal member, is a separate body from the pipe joint, and is used by being fitted into a distal end inner side of the pipe body when the pipe body is to be connected to the pipe joint.

Thus, because the support sleeve is a separate body from the pipe joint and needs to be fitted into the pipe body separately from the pipe joint, pipe body connection work is more complicated and it is possible that a worker may forget to fit in the support sleeve. US2005/0140140 teaches a connector for use with a fluid line comprising a connector body having a passage dimensioned to receive the fluid line and a capturing member supported on the connector body, a sealing member and a stiffening member.

### SUMMARY OF THE INVENTION

The present invention seeks to solve the problem described above, and an object of the present invention is to provide a pipe joint that reduces a number of components and simplifies work.

A pipe joint relating to a first aspect of the present invention is defined according to the technical features of claim 1.

In a pipe joint with the structure described above, the joint main body and the inner periphery support member are coupled. Thus, compared to when a joint main body and an inner periphery support member are separate bodies, a number of components may be smaller and work may be simplified.

Functions required from the inner periphery support member include supporting a pipe body (from the inner periphery face side) when the pipe body retention member and the seal member or the like are being fastened thereto from the outer face side, and regulating flatness of the pipe body. For these functions to be provided effectively, it is better if a clearance between an external diameter of the inner periphery support member and an internal diameter of the pipe body is small. However, when this clearance is made smaller, a gap between the distal end of the pipe body and the joint main body may go into an airtight state when the main body is connected, and there may be resistance to insertion.

Accordingly, in the pipe joint of the present invention, the air vent holes are formed in the inner periphery support member. The air vent holes are formed at the coupling portion side relative to the sealing portion in the tube axis direction of the inner periphery support member. Hence, because the air vent holes are formed, air is ejected through the air vent holes when the pipe body is inserted, and the pipe body may be coupled smoothly.

A pipe joint relating to a second aspect of the present invention further include a pipe body retention member that is formed in a tubular shape, that is disposed at the inner periphery side of the joint main body, that retains the pipe body from the outer face side thereof, and that is capable of increasing in diameter to the radial direction outer side and thereby releasing the pipe body.

In a pipe joint with the structure described above, the pipe body retention member that retains the pipe body from the outer face side is capable of increasing in diameter to the radial direction outer side, and thereby is capable of releasing the retention of the pipe body. Thus, after the pipe body has been connected, the pipe joint of the present invention may be detached from the pipe body. When the pipe body is being detached, air may flow in through the air vent holes. Thus, the pipe body may be detached smoothly.

In a pipe joint relating to a third aspect of the present invention, the inner periphery support member is formed as a separate body from the joint main body.

Thus, because the inner periphery support member is a separate body from the pipe joint, even if the inner periphery pipe member were to be damaged, the damage may be prevented from spreading to the joint main body.

In a pipe joint relating to the present invention, the inner periphery support member is structured with a low stiffness portion with a lower stiffness than other portions of the inner periphery support member, at the insertion aperture side relative to the coupling portion.

Thus, because the low stiffness portion is structured at the insertion aperture side relative to the coupling portion of the inner periphery support member, bending stiffness is lower at the low stiffness portion, and the inner periphery support member easily bends to follow movements of the pipe body. Therefore, loads on the coupling portion may be reduced and damage to the coupling portion may be suppressed.

According to the pipe joint of the present invention, a number of components may be reduced and work may be made simpler than when a joint main body and an inner periphery support member are separate bodies.

### BRIEF DESCRIPTION OF THE DRAWINGS

Exemplary embodiments of the present invention will be described in detail based on the following figures, wherein:
Fig. 1 is a partially sectional diagram illustrating a pipe joint relating to an exemplary embodiment of the present invention (not connected to a pipe body).
Fig. 2 is a partially cut away perspective diagram of an inner periphery support member of the pipe joint relating to the exemplary embodiment of the present invention.
Fig. 3 is a partially sectional diagram illustrating the pipe joint relating to the exemplary embodiment of the present invention (when connected to a pipe body).
Fig. 4 is a partially sectional diagram illustrating the pipe joint relating to the exemplary embodiment of the present invention (during a detachment operation from the pipe body).
Fig. 5 is a partially sectional diagram illustrating a variant example of the inner periphery support member of the pipe joint (not connected to the pipe body).
Fig. 6 is a partially sectional diagram illustrating another variant example of the inner periphery support member of the pipe joint (not connected to the pipe body).
Fig. 7 is a partially cut away perspective diagram of a variant example of the inner periphery support member of the pipe joint relating to the exemplary embodiment of the present invention.
Fig. 8 is a partially cut away perspective diagram of another variant example of the inner periphery support member of the pipe joint relating to the exemplary embodiment of the present invention.
Fig. 9 is a perspective diagram of yet another variant example of the inner periphery support member of the pipe joint relating to the exemplary embodiment of the present invention.

### DETAILED DESCRIPTION

Herebelow, a pipe joint relating to an exemplary embodiment of the present invention is described in accordance with the attached drawings.

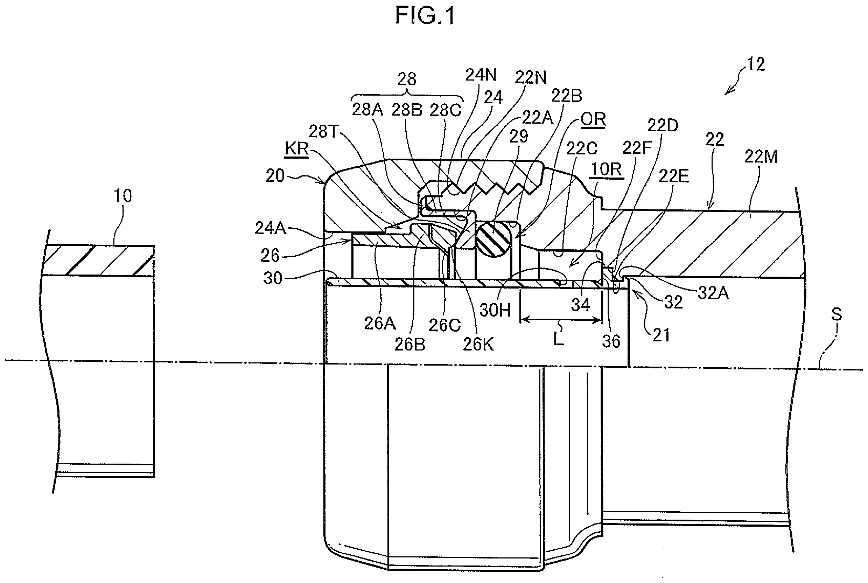

Fig. 1 shows a half-sectional drawing of a pipe joint 12 of the present exemplary embodiment (in a state in which a pipe body 10 is not connected). The pipe joint 12 is provided with a joint main body 20 and an inner periphery support member 30. In the drawings, the single-dot chain line S represents a tube axis of the pipe joint 12.

The joint main body 20 includes a tubular main body portion 22, a cap portion 24, a collet 26 and a dividing member 28.

The tubular main body portion 22 is integrally formed of resin and is substantially tubular. An internal diameter of one end side of the tube of the tubular main body portion 22 (the side from which the pipe body 10 is inserted) is larger than an internal diameter of a middle portion 22M. From the distal end side of the tubular main body portion 22, a first inner wall portion 22A, a second inner wall portion 22B and a third inner wall portion 22C are formed in this order. Of these, the first inner wall portion 22A has the largest internal diameter, and the second inner wall portion 22B and the third inner wall portion 22C have successively smaller diameters. Respective step portions are formed between the first inner wall portion 22A and the second inner wall portion 22B and between the second inner wall portion 22B and the third inner wall portion 22C. A male thread 22N is formed at an outer periphery side of the tubular main body portion 22 in correspondence with the first inner wall portion 22A and the second inner wall portion 22B. As the resin forming the tubular main body portion 22, polyphenylene sulfide (PPS), polyphenyl sulfone (PPSU), polyether sulfone (PES), polyether ether ketone (PEEK), polybutene (PB) or the like may be excellently used.

The dividing member 28 is fitted in at the inner side of the first inner wall portion 22A of the tubular main body portion 22. The dividing member 28 includes a tube portion 28B along the inner side of the first inner wall portion 22A, an outer portion 28A that protrudes to the radial direction outer side from a distal end of the tube portion 28B (an end portion at the side from which the pipe body 10 is inserted), and an inner portion 28C that protrudes to the radial direction inner side from a rear end of the tube portion 28B (an end portion at the opposite side from the distal end). The outer portion 28A is disposed so as to cover the distal end of the tubular main body portion 22. The inner portion 28C divides the first inner wall portion 22A from the second inner wall portion 22B, structures a collet space KR at the first inner wall portion 22A side thereof, and structures an O-ring space OR at the second inner wall portion 22B side thereof. The collet space KR side of the inner portion 28C is formed in a tapered shape that protrudes toward the distal end side, and structures a taper face 28T.

The cap portion 24 has an annular shape. A female thread 24N that threads onto the male thread 22N is formed at an inner wall of the cap portion 24. The cap portion 24 is coupled to the tubular main body portion 22 by the female thread 24N being threaded onto the male thread 22N. An insertion aperture portion 24A with a smaller internal diameter than the first inner wall portion 22A of the tubular main body portion 22 is formed at the side of the cap portion 24 from which the pipe body 10 is inserted.

The collet 26, which serves as a pipe body retention member, is disposed in the collet space KR. The collet 26 has an annular shape, and includes an aperture portion 26A, a large diameter portion 26B and a pawl portion 26C. An internal diameter of the collet 26 is smaller than the internal diameter of the insertion aperture portion 24A. The large diameter portion 26B is disposed at the proximal side of the collet space KR (the inner portion 28C side of the dividing member 28). An external diameter of the large diameter portion 26B is larger than the diameter of the insertion aperture portion 24A. An angled portion 26K is formed at the inner periphery of a distal end side of the large diameter portion 26B (the inner portion 28C side of the dividing member 28). The angled portion 26K has a taper shape whose internal diameter increases toward the distal end. The angled portion 26K is abutted against the distal end side of the taper face 28T of the dividing member 28.

The pawl portion 26C is formed at the insertion aperture portion 24A side relative to the angled portion 26K of the large diameter portion 26B. The pawl portion 26C is fabricated of metal, protrudes to the radial direction inner side relative to the inner periphery face of the collet 26, and is capable of biting into the outer face of the pipe body 10. The present exemplary embodiment is used with the pawl portion 26C being embedded, but a portion of the collet 26 may be protruded to the radial direction inner side and integrally form a pawl portion of resin. The aperture portion 26A is disposed to extend to the insertion aperture portion 24A side from the large diameter portion 26B, an external diameter of the aperture portion 26A is smaller than the internal diameter of the insertion aperture portion 24A, and a distal end portion of the aperture portion 26A is disposed along the inner wall of the insertion aperture portion 24A.

The O-ring space OR is formed at the inner periphery side of the second inner wall portion 22B. An O-ring 29 is disposed in the O-ring space OR. A gap between an outer periphery face of the pipe body 10 and the joint main body 20 is sealed by the O-ring 29.

An insertion cavity 10R is formed at the inner periphery side of the third inner wall portion 22C, between the third inner wall portion 22C and the inner periphery support member 30. The insertion cavity 10R is structured to extend along the inner periphery wall of the third inner wall portion 22C to a side corresponding with the second inner wall portion 22B and the first inner wall portion 22A. The pipe body 10 is inserted into the insertion cavity 10R. A step portion 22D and an engaging protrusion portion 22E are formed between the third inner wall portion 22C and the middle portion 22M. The engaging protrusion portion 22E includes a taper shape whose diameter is smaller at the step portion 22D side thereof, and the engaging protrusion portion 22E protrudes to the radial direction inner side relative to an inner wall of the middle portion 22M.

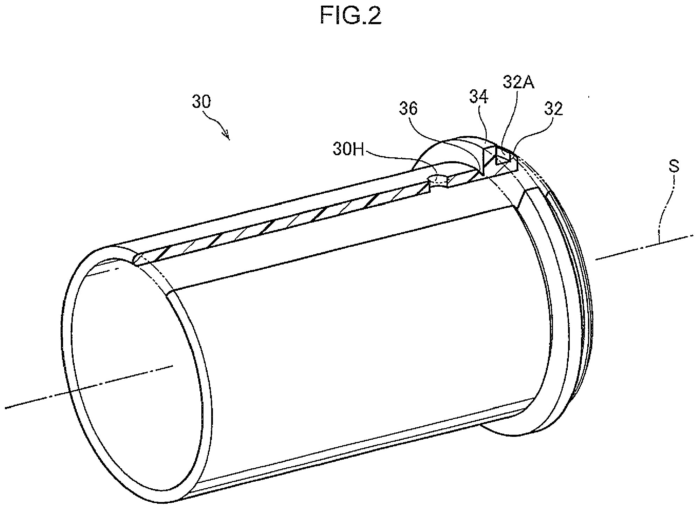

As illustrated in Fig. 2, the inner periphery support member 30 is formed in a substantially circular tube shape. An engaging portion 32 and a projection portion 34 are formed protruding to the radial direction outer side at one end side of the inner periphery support member 30. The engaging portion 32 is formed at a distal end of the one end side and has a taper shape whose diameter decreases toward the distal end. The projection portion 34 is disposed slightly apart from the engaging portion 32. An engaging depression 32A is structured between the projection portion 34 and the engaging portion 32.

Air vent holes 30H are formed in the inner periphery support member 30. The air vent holes 30H are formed in a range at the cap portion 24 side relative to the projection portion 34 and at the proximal side relative to the O-ring 29. The air vent holes 30H are penetrating holes, and the tube interior of the inner periphery support member 30 and the insertion cavity 10R are put into fluid communication by the air vent holes 30H. It is preferable if the air vent holes 30H have a diameter of the order of 1.0 mm to 5.0 mm.

The inner periphery support member 30 is coupled to the tubular main body portion 22 by the engaging portion 32 engaging with the engaging protrusion portion 22E. A region of this engagement is a coupling portion 21. In the engaged state, the engaging protrusion portion 22E is fitted into the engaging depression 32A. Movement of the inner periphery support member 30 in a direction of disengaging from the tubular main body portion 22 is blocked by the engagement between the engaging protrusion portion 22E and the engaging portion 32. Thus, because the inner periphery support member 30 is coupled to the tubular main body portion 22, there is no need to insert an inner periphery support member into the pipe body 10 beforehand during joint connection work, and the work may be performed more simply.

A face of the projection portion 34 of the inner periphery support member 30 at the opposite side thereof from the engaging depression 32A is coplanar with a step face 22F formed between the step portion 22D and the third inner wall portion 22C. Thus, an abutting face for the pipe body 10 is constituted by the projection portion 34 and the step face 22F.

The inner periphery support member 30 is made of a resin. As this resin, a resin the same as the tubular main body portion 22, or PPS, PPSU, POM or the like can be favorably used. It is preferable if the inner periphery support member 30 is structured of a material that is softer than the tubular main body portion 22, such that it is easy for the inner periphery support member 30 to follow movements of the connected pipe body 10. As a soft material, PPS, PPSU, POM or the like may be used. A proportional content of a strengthening agent may be reduced in order to raise the softness. Specifically, PPS may be provided with softness by setting the glass content to 0%.

A low stiffness groove 36 is formed at the insertion aperture portion 24A side of the inner periphery support member 30 relative to the projection portion 34. The low stiffness groove 36 is formed in a V shape in cross-section, around the full circumference of the outer periphery of the inner periphery support member 30. The low stiffness groove 36 is formed at the proximal side (the projection portion 34 side) relative to an axial direction central portion of the inner periphery support member 30. In order to maintain functioning of the inner periphery support member 30, it is preferable if the low stiffness groove 36 is formed at the coupling portion 21 side of a position in the axial direction of sealing by the O-ring 29.

The inner periphery support member 30 may be molded separately from the tubular main body portion 22 and the engaging portion 32 engaged with the engaging protrusion portion 22E, or the tubular main body portion 22 may be formed as an addition to the tubular main body portion 22 by twin-molding after the tubular main body portion 22 has been molded.

The inner periphery support member 30 has a function of supporting the pipe body 10 from the inner periphery side thereof against a force with which the pipe body 10 is fastened by the collet 26 and O-ring 29 or the like from the outer periphery face side after the pipe body 10 has been connected, and also a function of regulating flatness of the pipe body 10. For these functions to be exhibited effectively, it is preferable if the difference between the external diameter of the inner periphery support member 30 and the internal diameter of the pipe body 10 is in a range from 0 to 0.35 mm, and more preferably a range from 0.1 mm to 0.2 mm.

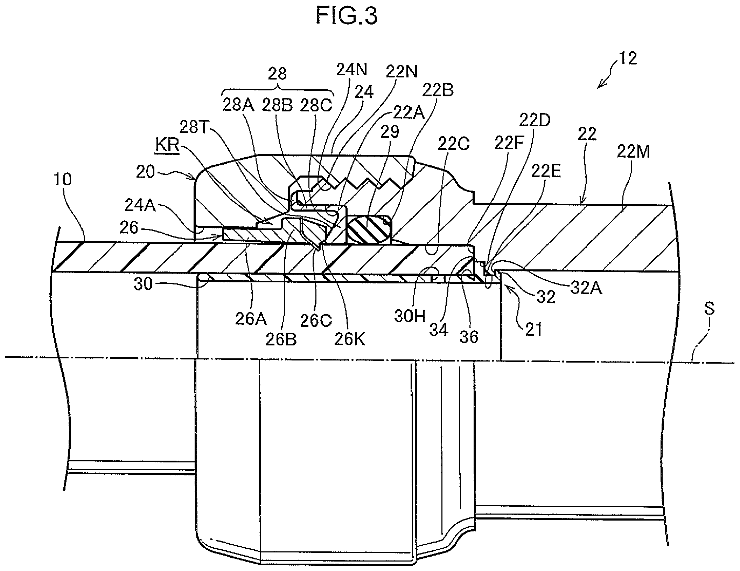

When the pipe body 10 is being coupled to the pipe joint 12, the pipe body 10 is inserted into the insertion cavity 10R from the insertion aperture portion 24A side and, as illustrated in Fig. 3, the distal end of the pipe body 10 is abutted against the step face 22F. At this time, air inside the insertion cavity 10R at the proximal side relative to the distal end of the pipe body 10 is ejected into the tube interior of the inner periphery support member 30 through the air vent holes 30H. Thus, positive pressurization of the insertion cavity 10R is prevented, and the pipe body 10 may be inserted smoothly.

As described above, the inner periphery support member 30 is inserted into the inner side of the pipe body 10 and supports the pipe body 10 from the inner periphery side thereof. The O-ring 29 is pressed by the pipe body 10, and forms a seal with the pipe body 10. The pawl portion 26C of the collet 26 bites into the outer periphery face of the pipe body 10 and blocks disengagement of the pipe body 10.

When a bending force acts on the pipe body 10, the force also acts on the inner periphery support member 30, and a large force is applied to the coupling portion 21. In the present exemplary embodiment, because the inner periphery support member 30 and the tubular main body portion 22 are formed as separate bodies, even if the inner periphery support member 30 is damaged, the damage does not spread to the tubular main body portion 22, and sealing between the pipe body 10 and the joint main body 20 may be assured.

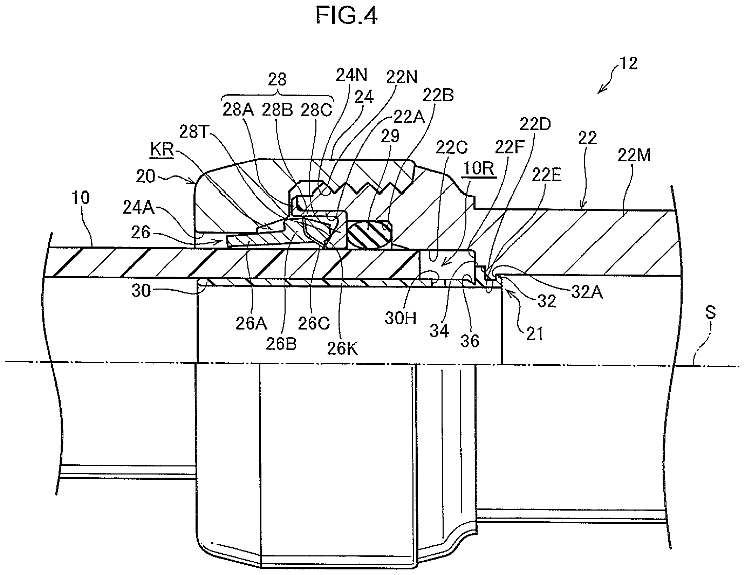

When the pipe body 10 is being detached from the pipe joint 12, a tool (not illustrated) is inserted into the insertion aperture portion 24A and pushes the collet 26 in deeper. Hence, as illustrated in Fig. 4, the distal end of the collet 26 moves along the taper face 28T of the dividing member 28 and the biting of the pawl portion 26C into the pipe body 10 is released. In this state, the pipe body 10 is pulled out. At this time, air flows through the air vent holes 30H from the tube interior of the inner periphery support member 30 into the insertion cavity 10R at the proximal side relative to the distal end of the pipe body 10. Therefore, the insertion cavity 10R is prevented from going to a negative pressure, and the pipe body 10 may be detached from the pipe joint 12 smoothly.

In the present exemplary embodiment, the inner periphery support member 30 is coupled to the joint main body 20. Thus, after detachment of the pipe body 10, the inner periphery support member 30 is not left inside the pipe body 10 but the state in which the inner periphery support member 30 is taken out from the pipe body 10 and coupled to the joint main body 20 is preserved. Therefore, the inner periphery support member 30 may be easily re-used.

As described hereabove, with the pipe joint 12 of the present exemplary embodiment, because the inner periphery support member 30 is coupled to the joint main body 20, insertion of the inner periphery support member 30 into the pipe body 10 and coupling may be carried out at one time, and connection work of the pipe body 10 may be carried out easily.

Moreover, because the air vent holes 30H are formed in the inner periphery support member 30, connection and detachment of the pipe body 10 may be carried out smoothly.

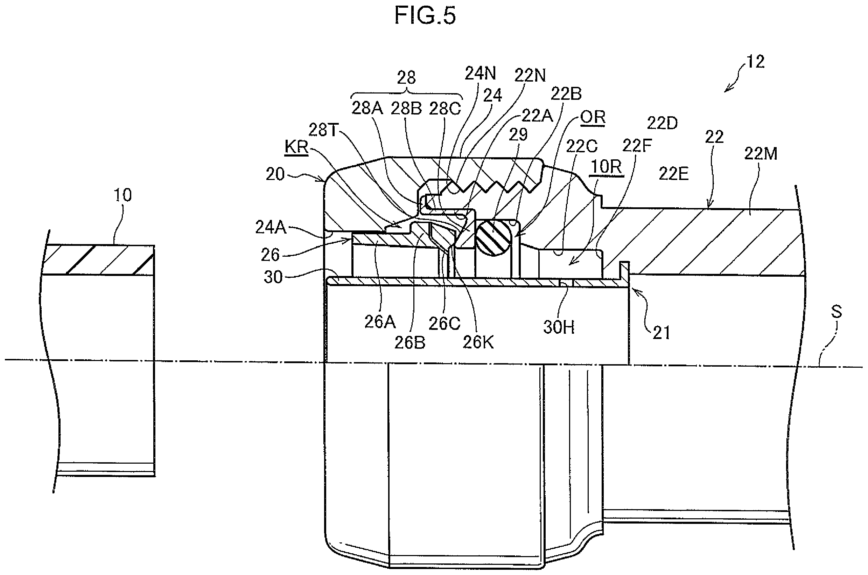

For the present exemplary embodiment, an example has been described in which the inner periphery support member 30 is fabricated of resin. However, as illustrated in Fig. 5, the inner periphery support member may be an inner periphery support member 30 fabricated of metal. When the inner periphery support member 30 is made of resin as in the present exemplary embodiment, a degree of freedom during molding may be higher than when the inner periphery support member is made of metal, and because the inner periphery support member 30 is light, handling may be easier.

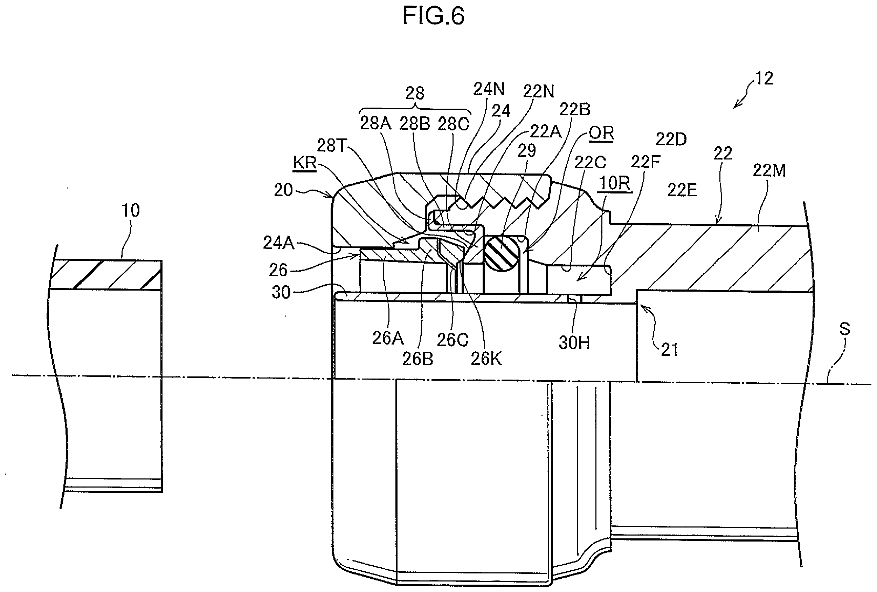

In the present exemplary embodiment, the inner periphery support member 30 and the joint main body 20 are formed as separate bodies. However, as illustrated in Fig. 6, but not being part of the present invention, the two may be formed integrally. When the inner periphery support member 30 and the joint main body 20 are formed integrally, molding may be easier.

In the present exemplary embodiment, the low stiffness groove 36 is formed at the inner periphery support member 30. When the low stiffness groove 36 is formed as in the present exemplary embodiment, a bending stiffness of the vicinity of the coupling portion 21 is lower and it is easier for the inner periphery support member 30 to follow movements of the pipe body 10. Therefore, damage to the inner periphery support member 30 may be suppressed.

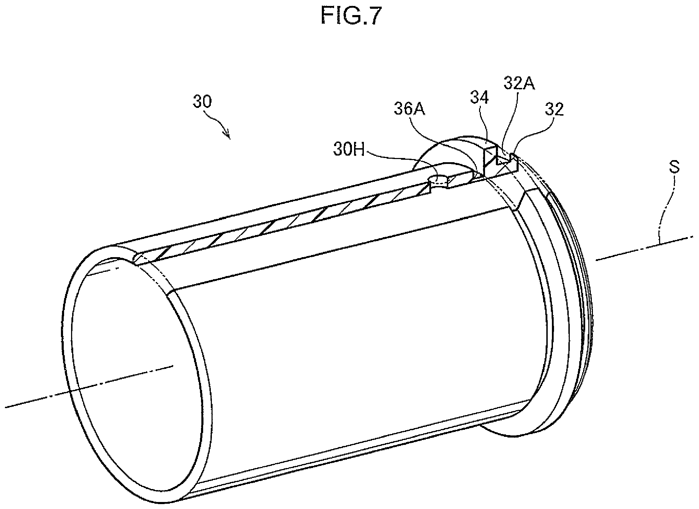

In the present exemplary embodiment, the low stiffness groove 36 is a groove with a V-shaped cross-section. However, a low stiffness portion may have a a different structure. For example, as illustrated in Fig. 7, there may be a low stiffness portion 36A that is a recessed groove with a rectangular cross-section. Furthermore, two or more of the low stiffness groove 36 may be formed.

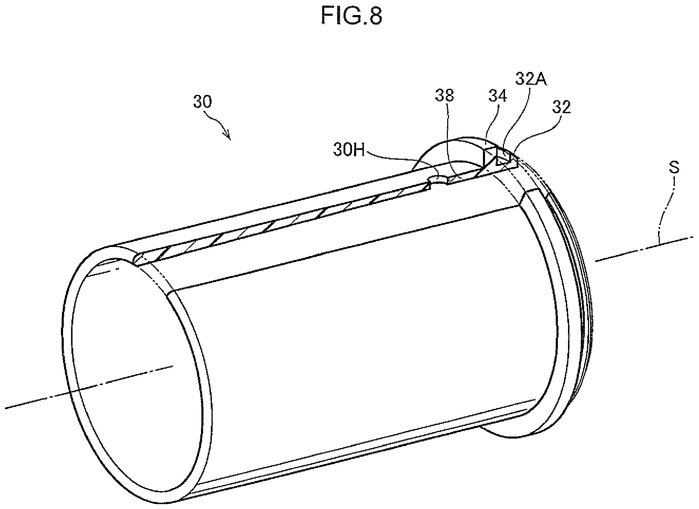

As illustrated in Fig. 8, a low stiffness portion 38 may be constituted by a thickness of the inner periphery support member 30 at the projection portion 34 side in the axial direction S being made thinner than at the distal end side.

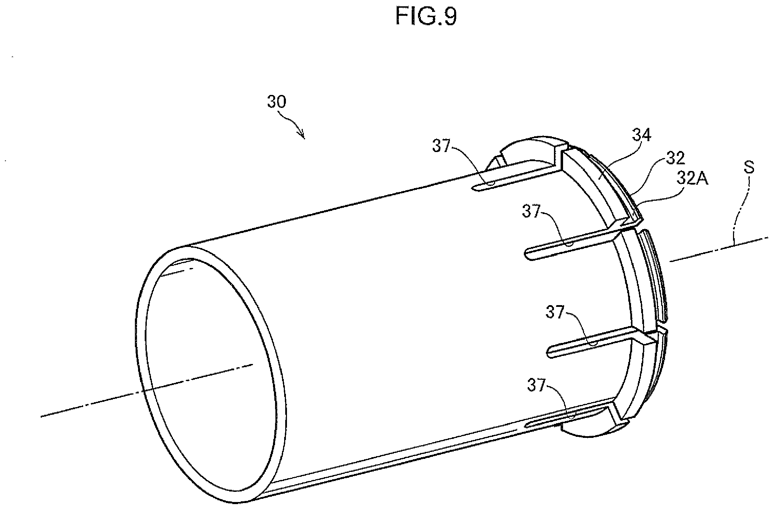

As illustrated in Fig. 9, a plural number of slits 37 along the axial direction S may be formed and provide low stiffness instead of the low stiffness groove 36. With this structure, the slits 37 may substitute for the air vent holes, and a structure may be provided that combines the low stiffness portion with the air vent holes.

## Claims

1. A pipe joint (12) comprising:
a joint main body (20) that is formed in a tubular shape, at one end of which an insertion aperture into which a pipe body (10) is to be inserted is structured, and in which a seal portion that seals a gap between the joint main body (20) and an outer periphery of the pipe body (10) is provided; and
an inner periphery support member (30) that is formed in a tubular shape, that structures an insertion cavity (10R) for the pipe body (10) between the inner periphery support member (30) and an inner periphery of the joint main body (20), that supports the pipe body (10) from an inner periphery side thereof, wherein the inner periphery support member (30) is coupled to the joint main body (20) at a coupling portion (21) formed at a proximal side relative to the insertion cavity (10R), and in which air vent holes (30H) are formed at the coupling portion (21) side relative to the seal portion in a tube axis direction (S) of the inner periphery support member, **characterised in that**
(i) the joint main body (20) includes a tubular main body portion (22), and an engaging protrusion portion (22E) is formed at an inner periphery side of the tubular main body portion (22), the engaging protrusion portion (22E) protruding in a radial direction towards the inner side of the tubular main body portion (22);
(ii) an engaging portion (32) and a projection portion (34) are formed at the inner periphery support member (30), the engaging portion (32) protruding to a radial direction outer side at one end side of the inner periphery support member (30);
(iii) the inner periphery support member (30) is coupled to the tubular main body portion (22) by the engaging portion (32) engaging with the engaging protrusion portion (22E), to form the coupling portion (21), and
(iv) the inner periphery support member (30) comprises a low stiffness portion (36, 36A, 38) with a lower stiffness than other portions of the inner periphery support member (30), at the insertion aperture side relative to the coupling portion (21).

2. The pipe joint (12) according to claim 1, further comprising a pipe body retention member (26) that is formed in a tubular shape, that is disposed at the inner periphery side of the joint main body (20), that retains the pipe body (10) from the outer face side thereof, and that is capable of increasing in diameter to the radial direction outer side and thereby releasing the pipe body (10).

3. The pipe joint (12) according to claim 1 or 2, wherein the inner periphery support member (30) is formed as a separate body from the joint main body (20).

## Patentansprüche

1. Rohrverbindung (12), die Folgendes umfasst:
einen Verbindungshauptkörper (20), der in einer röhrenförmigen Gestalt geformt ist, an dessen einem Ende eine Einführungsöffnung, in die ein Rohrkörper (10) eingesetzt werden soll, strukturiert ist und in dem ein Dichtungsabschnitt, der einen Spalt zwischen dem Verbindungshauptkörper (20) und einem Außenumfang des Rohrkörpers (10) abdichtet, bereitgestellt wird, und
ein Innenumfang-Stützelement (30), das in einer röhrenförmigen Gestalt geformt ist, das einen Einführungshohlraum (10R) für den Rohrkörper (10) zwischen dem Innenumfang-Stützelement (30) und einem Innenumfang des Verbindungshauptkörpers (20) strukturiert, das den Rohrkörper (10) von einer Innenumfangsseite desselben stützt, wobei das Innenumfang-Stützelement (30) an einem Kupplungsabschnitt (21), der an einer proximalen Seite im Verhältnis zu dem Einführungshohlraum (10R) geformt ist und in dem Entlüftungslöcher (30H) auf der Seite des Kupplungsabschnitts (21) im Verhältnis zu dem Dichtungsabschnitt in einer Röhrenachsenrichtung (S) des Innenumfang-Stützelements geformt sind, an den Verbindungshauptkörper (20) gekuppelt ist, **dadurch gekennzeichnet, dass**
(i) der Verbindungshauptkörper (20) einen röhrenförmigen Hauptkörperabschnitt (22) und einen Eingriffsvorsprungsabschnitt (22E), der an einer Innenumfangsseite des röhrenförmigen Hauptkörperabschnitts (22) geformt ist, einschließt, wobei der Eingriffsvorsprungsabschnitt (22E) in einer radialen Richtung zu der Innenseite des röhrenförmigen Hauptkörperabschnitts (22) hin vorspringt,
(ii) ein Eingriffsabschnitt (32) und ein Verlängerungsabschnitt (34) an dem Innenumfang-Stützelement (30) geformt sind, wobei der Eingriffsabschnitt (32) zu einer in Radialrichtung äußeren Seite an einer Endseite des Innenumfang-Stützelements (30) vorspringt,
(iii) das Innenumfang-Stützelement (30) dadurch an den röhrenförmigen Hauptkörperabschnitt (22) gekuppelt ist, dass der Eingriffsabschnitt (32) mit dem Eingriffsvorsprungsabschnitt (22E) ineinandergreift, um den Kupplungsabschnitt (21) zu bilden, und
(iv) das Innenumfang-Stützelement (30) einen Abschnitt (36, 36A, 38) niedriger Steifigkeit, mit einer niedrigeren Steifigkeit als andere Abschnitte des Innenumfang-Stützelements (30), an der Einführungsöffnungsseite im Verhältnis zu dem Kupplungsabschnitt (21) umfasst.

2. Rohrverbindung (12) nach Anspruch 1, die ferner ein Rohrkörper-Festhalteelement (26) umfasst, das in einer röhrenförmigen Gestalt geformt ist, das an der Innenumfangsseite des Verbindungshauptkörpers (20) angeordnet ist, das den Rohrkörper (10) von der Außenflächenseite desselben aus festhält und das dazu in der Lage ist, zu der in Radialrichtung äußeren Seite im Durchmesser zuzunehmen und dadurch den Rohrkörper (10) freizugeben.

3. Rohrverbindung (12) nach Anspruch 1 oder 2, wobei das Innenumfang-Stützelement (30) als ein von dem Verbindungshauptkörper (20) gesonderter Körper geformt ist.

## Revendications

1. Raccord de tuyau (12), comprenant :
un corps principal de raccord (20) formé en une forme tubulaire, une ouverture d'insertion dans laquelle un corps de tuyau (10) doit être inséré étant structurée au niveau d'une de ses extrémités, et dans lequel une partie d'étanchéité établissant l'étanchéité d'un espace entre le corps principal du raccord (20) et une périphérie externe du corps du tuyau (10) est formée ; et
un élément de support de la périphérie interne (30) formé en une forme tubulaire, structurant une cavité d'insertion (10R) pour le corps du tuyau (10) entre l'élément de support de la périphérie interne (30) et une périphérie interne du corps principal du raccord (20), supportant le corps du tuyau (10) à partir d'un côté périphérique interne de celui-ci dans lequel l'élément de support de la périphérie interne (30) est accouplé au corps principal du raccord (20) au niveau d'une partie d'accouplement (21) formée au niveau d'un côté proximal par rapport à la cavité d'insertion (10R), et dans lequel des trous d'évent (30H) sont formés au niveau du côté de la partie d'accouplement (21) par rapport à la partie d'étanchéité, dans une direction de l'axe du tube (S) de l'élément de support de la périphérie interne ; **caractérisé en ce que** :
(i) le corps principal du raccord (20) inclut une partie de corps principal tubulaire (22), et une partie d'engagement en saillie (22E) étant formée au niveau d'un côté périphérique interne de la partie de corps principal tubulaire (22), la partie d'engagement en saillie (22E) faisant saillie dans une direction radiale, vers le côté interne de la partie de corps principal tubulaire (22) ;
(ii) une parte d'engagement (32) et une partie d'extension (34) sont formées au niveau de l'élément de support de la périphérie interne (30), la partie d'engagement (32) faisant saillie vers un côté externe dans la direction radiale de l'élément de support de la périphérie interne (30) à un côté d'extrémité;
(iii) l'élément de support de la périphérie interne (30) est accouplé à la partie de corps principal tubulaire (22) par la partie d'engagement (32) s'engageant dans la partie d'engagement en saillie (22E), pour former la partie d'accouplement (21) ; et
(iv) l'élément de support de la périphérie interne (30) comprend une partie à rigidité réduite (36, 36A, 38), présentant une rigidité inférieure à celle d'autres parties de l'élément de support de la périphérie interne (30), au niveau du côté de l'ouverture d'insertion par rapport à la partie d'accouplement (21).

2. Raccord de tuyau (12) selon la revendication 1, comprenant en outre un élément de retenue du corps du tuyau (26) formé en une forme tubulaire, disposé au niveau du côté périphérique interne du corps principal du raccord (20), retenant le corps du tuyau (10) à partir de l'autre côté de face de celui-ci, et capable d'accroître son diamètre vers le côté externe dans la direction radiale et de dégager ainsi le corps du tuyau (10).

3. Raccord de tuyau (12) selon les revendications 1 ou 2, dans lequel l'élément de support de la périphérie interne (30) a la forme d'un corps séparé du corps principal du raccord (20).
